# EUROPEAN PATENT SPECIFICATION

(11) **EP 3 044 126 B1**
(45) Date of publication and mention of the grant of the patent: **28.08.2019**
(21) Application number: 14742671.2
(22) Date of filing: 01.07.2014
(51) Int. Cl.: B23P 19/00, B65D 88/74

(54) **METHOD OF ASSEMBLING A REFRIGERATED CARGO CONTAINER**
MONTAGEVERFAHREN EINES GEKÜHLTEN CARGO CONTAINERS
MÉTHODE D'ASSEMBLAGE D'UN GRAND CONTENEUR AVEC SYSTÈME DE REFROIDISSEMENT

(30) Priority: 10.09.2013 US 201361875794 P
(43) Date of publication of application: 20.07.2016
(73) Proprietor: Carrier Corporation, Farmington, CT 06034 (US)
(72) Inventor: STONE, Dennis M., Syracuse, New York 13221 (US); VANG, Ping Sue, Syracuse, New York 13221 (US); GAN, Mingfei, Syracuse, New York13221 (US); CRESSWELL, Kenneth, Syracuse, New York 13221 (US)
(74) Representative: Dehns
(86) International application number: PCT/US2014/044983
(87) International publication number: WO 2015/038218

(56) References cited:
- EP-A1- 2 180 276
- WO-A1-2012/158304
- CA-A1- 1 193 233
- DE-A1- 2 236 004

## Description

### BACKGROUND OF THE INVENTION

The subject matter disclosed herein relates to a method of assembling a refrigerated transportation cargo container.

A typical refrigerated cargo container, such as those utilized to transport a cargo via sea, rail or road, is a container modified to include a refrigeration unit located at one end of the container. The refrigeration unit includes a compressor, condenser, expansion valve and evaporator coil, all located at the end of the container. A volume of refrigerant circulates throughout the refrigeration unit, and one or more evaporator fans of the refrigeration unit blow a flow of supply air across the evaporator coil cooling the supply air and forcing it out into the container.

Typically, installation and service of the evaporator fans and evaporator coil, or "evaporator section" of the refrigeration unit is performed from an interior of the cargo container. The evaporator section is a large component, often installed and removed with the assistance of a fork lift or other similar installation device. Use of such equipment in the interior of the cargo container risks damage to the interior walls and/or floor of the cargo container and other components of the refrigeration system. Further, such installation and service requires movement of technicians into and out of the cargo container, some of which are 50 feet in length. Such movement is inefficient and increases installation and/or service time.

WO 2012/158304 discloses a heat sink assembly for cooling a power electronics module that includes a housing and a heat sink structure.

EP 2180276 teaches a casing structure of a container refrigeration unit for cooling the interior of a container.

CA 1193233 discloses a heating unit mounted to the enclosed body of a transport container.

DE 2236004 discloses the use of a modular system for storing and transporting goods where the temperature and the humidity is controlled.

### BRIEF DESCRIPTION OF THE INVENTION

In one aspect the invention provides a method of assembling a refrigerated transportation cargo container according to claim 1 comprising: installing an evaporator of a refrigeration unit into a housing, the housing having a back wall and a front wall opposite the back wall, the installing of the evaporator by inserting the evaporator into the housing through one or more front wall openings; and installing the housing to a cargo container with the back wall of the housing closest to an interior of the cargo container, relative to the front wall of the housing.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of a refrigerated transportation cargo container;
FIG. 2 is a schematic illustration of a refrigeration unit for a refrigerated transportation cargo container;
FIG. 3 is another schematic illustration of an embodiment of installation of a refrigeration unit into a refrigerated transportation cargo container; and
FIG.4 is a schematic illustration of another embodiment of installation of a refrigeration unit into a refrigerated transportation cargo container.

The detailed description explains embodiments of the invention, together with advantages and features, by way of example with reference to the drawing.

### DETAILED DESCRIPTION OF THE INVENTION

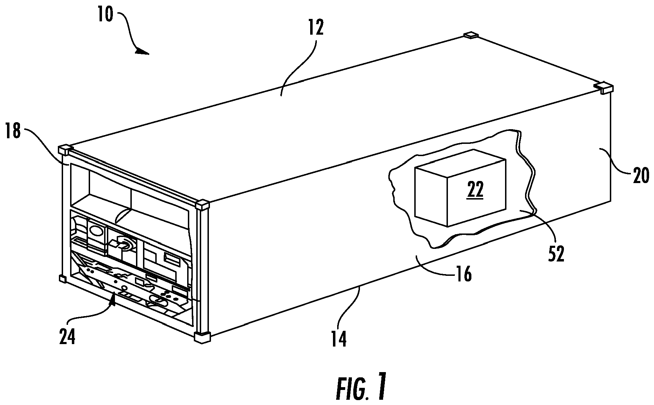

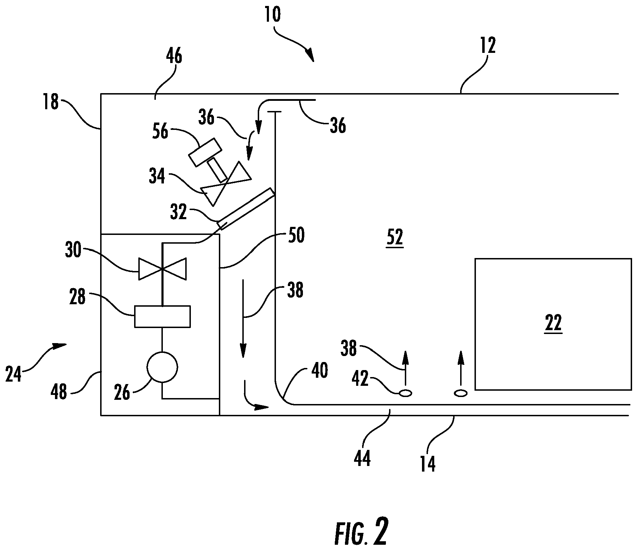

Shown in FIG. 1 is a refrigerated cargo container 10. The cargo container 10 is formed into a generally rectangular construction, with a top wall 12, a directly opposed bottom wall 14, opposed side walls 16 and a front wall 18. The cargo container 10 further includes a door or doors (not shown) at a rear wall 20, opposite the front wall 18. The cargo container 10 is configured to maintain a cargo 22 located inside the cargo container 10 at a selected temperature through the use of a refrigeration unit 24 located at the container 10. The cargo container 10 is mobile and is utilized to transport the cargo 22 via, for example, a truck, a train or a ship. The refrigeration unit 24 is located at the front wall 18, and includes a compressor 26, a condenser 28, an expansion valve 30, an evaporator 32 and an evaporator fan 34 (shown in FIG. 2), as well as other ancillary components.

Referring to FIG. 2, the refrigeration unit 24 flows return airflow 36 across the evaporator 32 via the evaporator fan 34, thus cooling the airflow 36 to a selected temperature and urges the cooled return airflow 36, now referred to as supply air 38, through a refrigeration unit outlet 40 into the container 10 via, for example, openings 42 in one or more T-bars 44 extending along the bottom wall 14 of the container 10 to cool the cargo 22.

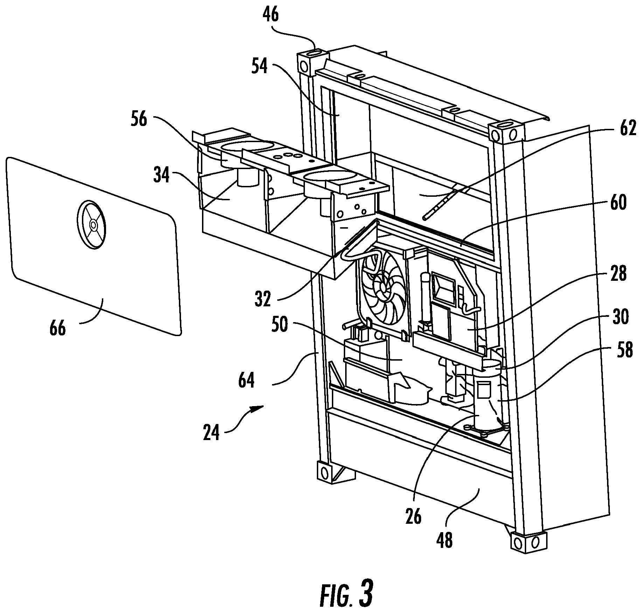

Referring now to FIG. 3, the refrigeration unit 24 includes a housing 46 to contain components of the refrigeration unit 24. The housing 46 includes a front panel 48 and a back panel 50 opposite the front panel 48 and nearer to an interior 52 of the cargo container 10.

In some examples, the housing 46 is separate and distinct from the cargo container 10, while in other examples, the housing 46 is an integral part of the cargo container 10. In some examples, the housing 46 is separated into an evaporator section 54 containing the evaporator 32, the evaporator fan 34 and an evaporator fan motor 56 and a condenser section 58 containing the compressor 26, the condenser 28 and the expansion valve 30. The evaporator section 54, located above the condenser section 58 in some examples is separated from the condenser section 58 by an evaporator support 60 extending across the housing 46.

The back panel 50 is configured as a structural member such that the components of the refrigeration unit 24, including the evaporator 32, the evaporator fan 34, the evaporator fan motor 56, the compressor 26, the condenser 28 and/or the expansion valve 30, are secured to and/or supported by the back panel 50. The front panel 48 of the housing 46 is configured with front panel openings 62 and 64. The front panel opening 62 allows for installation and/or removal of the components in the evaporator section 54 therethrough, and the front panel opening 64 allows for installation and/or removal of the components on the condenser section 58 therethrough. The front panel openings 62 and 64 allow for installation, removal and service of the components from outside of the cargo container 10, thus reducing installation and/or service time. Servicing the condenser section 58 and the evaporator section 54 from the outside of the cargo container 10 via the front panel openings 62 and 64 allows such servicing to be performed while the cargo container 10 is fully loaded with cargo 22, thereby saving servicing time since the container 10 does not need to be unloaded first.

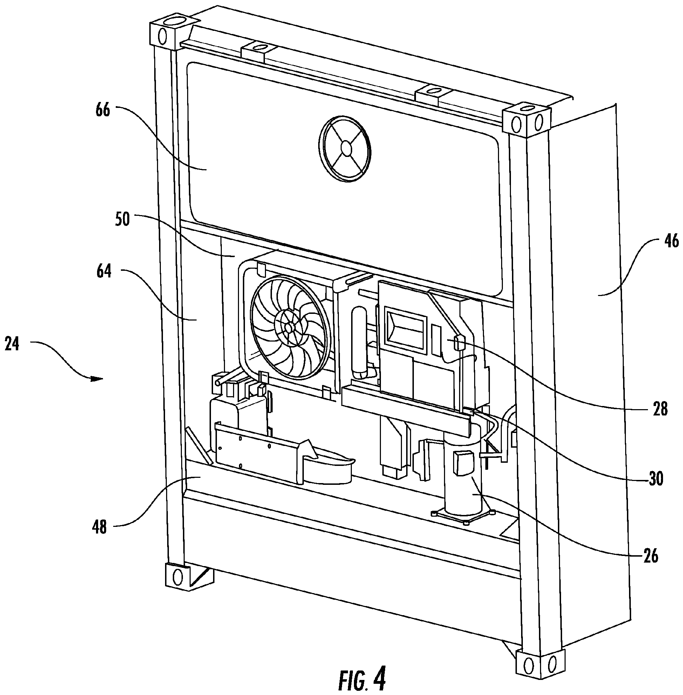

Referring to FIG. 4, one or more covers 66 are used to cover the front panel openings 62 and 64, and are removed to provide access to the evaporator section 54 and the condenser section 58. In some examples, the covers 66 are attached via hinges (not shown) to the housing 46. Further, the covers 66 are, in some examples, insulated to minimize losses through the covers 66.

In one embodiment, assembly of the cargo container 10 is accomplished by installing the housing 46 to the cargo container 10 through front panel openings 62 and/or 64, then installing the refrigeration unit 24 components (the evaporator 32, evaporator fan 34, evaporator fan motor 56, the compressor 26, the condenser 28 and the expansion valve 30) to the housing 46 through the front panel openings 62 nd/or 64. In other embodiments, the refrigeration unit 24 components are installed to the housing 46, then the housing 46 is installed to the cargo container 10 through the front panel openings 62 and/or 64.

## Claims

1. A method of assembling a refrigerated transportation cargo container (10) comprising:
installing an evaporator (32) of a refrigeration unit (24) into a housing (46), the housing having a back wall (50) and a front wall (48) opposite the back wall, **characterised by** the installing of the evaporator by inserting the evaporator into the housing through one or more front wall openings (62, 64); and
installing the housing to a cargo container with the back wall of the housing closest to an interior (52) of the cargo container, relative to the front wall of the housing.

2. The method of Claim 1, further comprising installing one or more covers (66) over the one or more front wall openings.

3. The method of Claim 1, further comprising supporting the evaporator (32) via the back wall.

4. The method of Claim 1, further comprising securing the evaporator (32) to the back wall (50).

5. The method of Claim 1, wherein the housing (46) is divided into two or more compartments.

6. The method of Claim 1, comprising installing the evaporator (32) into the housing before installing the housing into the cargo container.

7. The method of Claim 1, comprising installing the housing into the cargo container before installing the evaporator (32) into the housing.

8. The method of Claim 1, further comprising removing the evaporator (32) from the housing via the one or more front wall openings.

9. The method of Claim 1, further comprising servicing the evaporator (32) via the one or more front wall openings.

## Patentansprüche

1. Verfahren zur Montage eines gekühlten Cargo-Containers (10) zum Transport, umfassend:
Einbauen eines Verdampfers (32) eines Kühlaggregats (24) in ein Gehäuse (46), wobei das Gehäuse eine Rückwand (50) und eine Vorderwand (48) gegenüber der Rückwand aufweist,
**gekennzeichnet durch** das
Einbauen des Verdampfers durch Einsetzen des Verdampfers in das Gehäuse durch eine oder mehrere Öffnungen (62, 64) in der Vorderwand; und
Einbauen des Gehäuses in einen Cargo-Container, wobei die Rückwand des Gehäuses am nächsten an einer Innenseite (52) des Cargo-Containers im Verhältnis zur Vorderwand des Gehäuses ist.

2. Verfahren nach Anspruch 1, ferner umfassend das Einbauen einer oder mehrere Abdeckungen (66) über der einen oder den mehreren Öffnungen in der Vorderwand.

3. Verfahren nach Anspruch 1, ferner umfassend das Stützen des Verdampfers (32) über die Rückwand.

4. Verfahren nach Anspruch 1, ferner umfassend das Fixieren des Verdampfers (32) an der Rückwand (50).

5. Verfahren nach Anspruch 1, wobei das Gehäuse (46) in zwei oder mehr Fächer unterteilt ist.

6. Verfahren nach Anspruch 1, umfassend das Einbauen des Verdampfers (32) in das Gehäuse vor dem Einbauen des Gehäuses in den Cargo-Container.

7. Verfahren nach Anspruch 1, umfassend das Einbauen des Gehäuses in den Cargo-Container vor dem Einbauen des Verdampfers (32) in das Gehäuse

8. Verfahren nach Anspruch 1, ferner umfassend das Entnehmen des Verdampfers (32) aus dem Gehäuse über die eine oder die mehreren Öffnungen in der Vorderwand.

9. Verfahren nach Anspruch 1, ferner umfassend das Warten des Verdampfers (32) über die eine oder die mehreren Öffnungen in der Vorderwand.

## Revendications

1. Méthode d'assemblage d'un grand conteneur de transport avec système de refroidissement (10) comprenant :
l'installation d'un évaporateur (32) d'une unité de réfrigération (24) dans un logement (46), le logement ayant une paroi arrière (50) et une paroi avant (48) opposée à la paroi arrière, **caractérisée par** l'installation de l'évaporateur par insertion de l'évaporateur dans le logement à travers une ou plusieurs ouvertures de paroi avant (62, 64) ; et
l'installation du logement sur un grand conteneur avec la paroi arrière du logement étant la plus proche de l'intérieur (52) du grand conteneur par rapport à la paroi avant du logement.

2. Méthode selon la revendication 1, comprenant en outre l'installation d'un ou de plusieurs couvercles (66) sur les une ou plusieurs ouvertures de paroi avant.

3. Méthode selon la revendication 1, comprenant en outre le support de l'évaporateur (32) par l'intermédiaire de la paroi arrière.

4. Méthode selon la revendication 1, comprenant en outre la fixation de l'évaporateur (32) sur la paroi arrière (50).

5. Méthode selon la revendication 1, dans laquelle le logement (46) est divisé en deux compartiments ou plus.

6. Méthode selon la revendication 1, comprenant l'installation de l'évaporateur (32) dans le logement avant l'installation du logement dans le grand conteneur.

7. Méthode selon la revendication 1, comprenant l'installation du logement dans le grand conteneur avant l'installation de l'évaporateur (32) dans le logement.

8. Méthode selon la revendication 1, comprenant en outre le retrait de l'évaporateur (32) du logement par l'intermédiaire des une ou plusieurs ouvertures de paroi avant.

9. Méthode selon la revendication 1, comprenant en outre l'entretien de l'évaporateur (32) par l'intermédiaire des une ou plusieurs ouvertures de paroi avant.
